(19) Europäisches Patentamt / European Patent Office / Office européen des brevets

(11) **EP 4 769 543 A1**

(12) **EUROPEAN PATENT APPLICATION**
published in accordance with Art. 153(4) EPC

(43) Date of publication:
01.07.2026 Bulletin 2026/27

(21) Application number: 24877548.8

(22) Date of filing: 11.10.2024

(51) International Patent Classification (IPC):
$H01M\ 4/36^{(2006.01)}$    $H01M\ 4/505^{(2010.01)}$
$H01M\ 4/525^{(2010.01)}$    $C01G\ 53/00^{(2025.01)}$
$H01M\ 4/02^{(2006.01)}$

(52) Cooperative Patent Classification (CPC):
C01G 53/00; H01M 4/02; H01M 4/36; H01M 4/505;
H01M 4/525; Y02E 60/10

(86) International application number:
PCT/KR2024/015392

(87) International publication number:
WO 2025/080013 (17.04.2025 Gazette 2025/16)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.10.2023 KR 20230135434

(71) Applicant: LG Chem, Ltd.
Seoul 07336 (KR)

(72) Inventors:
• CHOI, Jong Hyun
Daejeon 34122 (KR)
• PARK, Jae Yeol
Daejeon 34122 (KR)
• YOON, Seok Hyun
Daejeon 34122 (KR)
• PARK, Jung Won
Daejeon 34122 (KR)

(74) Representative: Hoffmann Eitle
Patent- und Rechtsanwälte PartmbB
Arabellastraße 30
81925 München (DE)

(54) **CATHODE ACTIVE MATERIAL AND PREPARATION METHOD THEREFOR**

(57) The present invention relates to a cathode active material capable of improving the performance and stability of a lithium-rich manganese-based oxide, thereby improving the performance of a battery comprising same, and, to a cathode active material and a preparation method therefor, the material comprising: a core part comprising a lithium-rich manganese-based oxide of a layered structure that includes both a $Li_2MnO_3$ phase and a $LiMO_2$ (here, M is at least one element selected from among Ni, Co and Mn) phase; a first layer which is continuously formed on the core part and which has a crystal structure belonging to the R-3m space group; and a second layer which is continuously formed on the first layer and which has a rock-salt crystal structure belonging to the Fm-3m space group.

[FIG. 1]

EP 4 769 543 A1

**Description**

**[Technical Field]**

CROSS-REFERENCE TO RELATED APPLICATION

This application claims the benefit of priority to Korean Patent Application No. 10-2023-0135434 filed on October 11, 2023, the disclosure of which is incorporated herein by reference in its entirety.

Technical Field

The present invention relates to a positive electrode active material and a method for manufacturing the same.

**[Background Art]**

A lithium secondary battery is composed of four major components: a positive electrode, a negative electrode, a separator, and an electrolyte. Among them, a positive electrode active material included in the positive electrode plays a major role in determining the capacity, output, and lifespan of the battery. In order for the lithium secondary battery to have high energy density, output, and lifespan, it is essential to improve the performance of the positive electrode active material, and thus, a lot of research has been conducted recently to develop high-performance positive electrode active materials.

Lithium-rich layered oxide, a kind of positive electrode active material, is a mixed phase in which $Li_2MnO_3$ phase and $LiMO_2$ (M=Ni, Mn, Co) phase are mixed, and has the characteristic of providing a very large capacity of 250 mAh/g at a high operating voltage (>3.5 V vs. Li/Li$^+$). Therefore, the lithium-rich layered oxide is attracting attention as a low-cost, high-capacity positive electrode active material.

However, the lithium-rich layered oxide has problems that occur due to the structural characteristic of two phases being mixed. Specifically, when a battery including the lithium-rich layered oxide is driven under a high voltage, there is a problem that irreversible capacity loss occurs in the first formation process, resulting in reduced efficiency, and a problem that voltage fading occurs and $O_2$ gas is generated as the layered structure changes to a rock salt structure through a spinel structure during the charging/discharging cycle.

Therefore, it is necessary to secure a technology for improving the performance and stability of the lithium-rich layered oxide.

**[Disclosure]**

**[Technical Problem]**

An object to be achieved by the present invention is to improve the performance and stability of a lithium-rich layered oxide, and as a result, to improve the performance of a battery including the same.

Another object of the present invention is to provide a method for manufacturing the positive electrode active material.

**[Technical Solution]**

In order to achieve the above object, the present invention provides a positive electrode active material and a method for manufacturing the positive electrode active material.

(1) The present invention provides a positive electrode active material comprising: a core part including a lithium-rich manganese-based oxide having a layered structure simultaneously including a $Li_2MnO_3$ phase and a $LiMO_2$ phase, wherein M is an element including at least one selected from Ni, Co, and Mn; a first layer formed continuously on the core part and including a crystal structure belonging to an R-3m space group; and a second layer formed continuously on the first layer and including a rock salt-type crystal structure belonging to an Fm-3m space group.

(2) The present invention provides the positive electrode active material according to (1) above, wherein the lithium-rich manganese-based oxide includes at least one doping element selected from Mo, Nb, K, Cl, Na, Ti, Mg, Ru, Ta, and Zr.

(3) The present invention provides the positive electrode active material according to (1) or (2) above, wherein the lithium-rich manganese-based oxide includes a crystal structure belonging to a C2/m space group and an R-3m space group.

(4) The present invention provides the positive electrode active material according to any one of (1) to (3) above, wherein the lithium-rich manganese-based oxide has a manganese (Mn) content of 50 mol% or more among the total metals excluding lithium.

(5) The present invention provides the positive electrode active material according to any one of (1) to (4) above, wherein the lithium-rich manganese-based oxide has a composition represented by Chemical Formula 1 below:

[Chemical Formula 1]     $Li_aNi_bCo_cMn_dMe_eO_2$

wherein:

Me is at least one selected from Mo, Nb, K, Cl, Na, Ti, Mg, Ru, Ta, and Zr, and
$1.09 \leq a \leq 1.20$, $0 \leq b \leq 0.50$, $0 \leq c \leq 0.10$, $0.50 \leq d \leq 1.0$, and $0 < e \leq 0.10$.

(6) The present invention provides the positive electrode active material according to any one of (1) to (5) above, wherein the lithium-rich manganese-based oxide is in the form of a secondary particle.

(7) The present invention provides the positive electrode active material according to any one of (1) to (6) above, wherein the lithium-rich manganese-based oxide has an average particle diameter ($D_{50}$) of 5 μm to 15 μm.

(8) The present invention provides the positive electrode active material according to any one of (1) to (7) above, wherein the positive electrode active material further includes a coating layer formed on the second layer and including at least one selected from carbon and sulfur.

(9) The present invention provides the positive electrode active material according to (8) above, wherein the coating layer further includes boron.

(10) The present invention provides the positive electrode active material according to (8) or (9) above, wherein the carbon is derived from urea, and the sulfur is derived from thiourea.

(11) The present invention provides the positive electrode active material according to any one of (1) to (10) above, wherein the first layer has a thickness of 0.5 nm to 20 nm.

(12) The present invention provides the positive electrode active material according to any one of (1) to (11) above, wherein the second layer has a thickness of 0.5 nm to 20 nm.

(13) The present invention provides a method for manufacturing the positive electrode active material according to claim 1, the method comprising the steps of: (A) dry mixing a composite transition metal hydroxide and a lithium-containing raw material, followed by a first calcination at 400°C to 500°C and a second calcination at 800°C to 1000°C to produce a lithium-rich manganese-based oxide; and (B) dry mixing at least one selected from urea and thiourea with the lithium-rich manganese-based oxide by a mechanofusion method, followed by heat treatment at 300°C to 550°C.

(14) The present invention provides the method for manufacturing the positive electrode active material according to (13) above, wherein in the step (A), when dry mixing the composite transition metal hydroxide and the lithium-containing raw material, a doping raw material including at least one doping element selected from Mo, Nb, K, Cl, Na, Ti, Mg, Ru, Ta, and Zr is further mixed.

(15) The present invention provides the method for manufacturing the positive electrode active material according to (13) or (14) above, wherein the composite transition metal hydroxide has a composition represented by Chemical Formula 2 below:

[Chemical Formula 2]     $Ni_{b'}Co_{c'}Mn_{d'}Me_{e'}(OH)_2$

wherein:

Me is at least one selected from Mo, Nb, K, Cl, Na, Ti, Mg, Ru, Ta, and Zr, and
$0 \leq b' \leq 0.50$, $0 \leq c' \leq 0.10$, $0.50 \leq d' \leq 1.0$, $0 \leq e' \leq 0.10$, and $b'+c'+d'+e' = 1$.

(16) The present invention provides the method for manufacturing the positive electrode active material according to any one of (13) to (15) above, wherein the first calcination and the second calcination are each independently performed under an atmospheric atmosphere or an oxygen atmosphere.

(17) The present invention provides the method for manufacturing the positive electrode active material according to any one of (13) to (16) above, wherein in the step (B), the at least one selected from urea and thiourea is mixed in an amount of 0.3 to 3 parts by weight based on 100 parts by weight of the lithium-rich manganese-based oxide.

(18) The present invention provides the method for manufacturing the positive electrode active material according to any one of (13) to (17) above, wherein the heat treatment is performed under an $N_2$ atmosphere.

(19) The present invention provides the method for manufacturing the positive electrode active material according to any one of (13) to (18) above, wherein in the step (B), when dry mixing the at least one selected from urea and thiourea with the lithium-rich manganese-based oxide, a boron-containing raw material is further mixed.

(20) The present invention provides the method for manufacturing the positive electrode active material according to (19) above, wherein the boron-containing raw material is mixed in an amount of 0.2 to 2 parts by weight based on 100 parts by weight of the lithium-rich manganese-based oxide.

**[Advantageous Effects]**

The positive electrode active material of the present invention includes a first layer comprising a crystal structure belonging to an R-3m space group formed continuously on a lithium-rich manganese-based oxide, and a second layer comprising a rock salt-type crystal structure belonging to an Fm-3m space group formed continuously on the first layer, whereby the structure of the positive electrode active material is stabilized, and therefore, the performance of a lithium secondary battery including it, for example, the lifespan characteristics, can be improved and gas generation can be reduced.

**[Description of Drawings]**

FIG. 1 is a HAADF-STEM image of a cross-section of a positive electrode active material manufactured in Example 5.

FIG. 2 is an $a/I_{MnL3}$ ratio map of a cross-section of a positive electrode active material manufactured in Example 5.

FIG. 3 is an O K pre-edge/main edge ratio map of a cross-section of a positive electrode active material manufactured in Example 5.

FIG. 4 is a HAADF-STEM image of a cross-section of a positive electrode active material manufactured in Comparative Example 1.

FIG. 5 is an $a/I_{MnL3}$ ratio map of a cross-section of a positive electrode active material manufactured in Comparative Example 1.

FIG. 6 is an O K pre-edge/main edge ratio map of a cross-section of a positive electrode active material manufactured in Comparative Example 1.

FIG. 7 shows EELS analysis data of an O K edge.

FIG. 8 shows EELS analysis data of an Mn $L_3$ edge.

FIG. 9 is an HR-(S)TEM image of a positive electrode active material of Example 5 of the present invention.

FIG. 10 is an HR-(S)TEM image of a positive electrode active material of Comparative Example 1.

FIG. 11 is an HR-(S)TEM image of a positive electrode active material of Comparative Example 3.

FIG. 12 is an HAADF-STEM image and EDS data of a positive electrode active material of Example 5 of the present invention.

FIG. 13 is a graph showing the amount of gas generated during 50 cycles of charging and discharging.

FIG. 14 is a graph showing the amount of gas generated during storage in a chamber at 60°C for 4 weeks.

FIG. 15 is a graph of a charge and discharge profile according to repeated charging/discharging cycles.

FIG. 16 is a specific capacity graph according to repeated charging/discharging cycles after the formation cycle and the $0^{th}$ cycle.

FIG. 17 is a graph of average discharge voltage according to repeated charging/discharging cycles.

FIG. 18 is a graph of energy density according to repeated charging/discharging cycles.

**[Best Modes of the Invention]**

Hereinafter, the present invention will be described in more detail to help understand the present invention.

The terms or words used in the description and claims of the present invention should not be construed as being limited to their ordinary or dictionary meanings, but should be interpreted as meanings and concepts consistent with the technical spirit of the present invention, based on the principle that the inventor may adequately define the concepts of terms to best describe his invention.

It should be understood that terms such as 'comprise', 'include', and "have" as used herein are intended to designate the presence of implemented features, numbers, steps, components, or combinations thereof, but not to preclude a possibility of existence or addition of one or more other features, numbers, steps, components, or combinations thereof.

In this specification, the term 'on~' is meant to include not only a case where a component is formed directly on another component, but also a case where a third component is interposed between these components.

In this specification, a 'primary particle' refers to a minimum particle unit recognized when observing a positive electrode active material using a scanning electron microscope (SEM), and a 'secondary particle' refers to a secondary structure formed by agglomeration of a plurality of primary particles.

In this specification, the term 'average particle diameter $(D_{50})$' means a particle diameter at 50% point of a cumulative volume distribution according to the particle diameter. The average particle diameter $(D_{50})$ can be measured by dispersing the powder to be measured in a dispersion medium and then introducing it into a commercially available laser diffraction particle size measuring device (e.g., Bluewave of Microtrac), measuring a difference in diffraction patterns according to the particle size when the particles pass through the laser beam to obtain a particle size distribution, and calculating a particle diameter at a point that is 50% of the cumulative volume distribution according to the particle size in the measuring device.

## Positive Electrode Active Material

The present invention provides a positive electrode active material comprising: a core part including a lithium-rich manganese-based oxide having a layered structure simultaneously including a $Li_2MnO_3$ phase and a $LiMO_2$ phase, wherein M is an element including at least one selected from Ni, Co, and Mn; a first layer formed continuously on the core part and including a crystal structure belonging to an R-3m space group; and a second layer formed continuously on the first layer and including a rock salt-type crystal structure belonging to an Fm-3m space group.

The present inventors have found that when a positive electrode active material includes a first layer comprising a crystal structure belonging to an R-3m space group formed continuously on a lithium-rich manganese-based oxide, and a second layer comprising a rock salt-type crystal structure belonging to an Fm-3m space group formed continuously on the first layer, the surface structure of the positive electrode active material is stabilized, so that migration of the transition metal is suppressed, phase change is suppressed, and lithium mobility is improved, and as a result, the lifespan characteristics of a battery including the positive electrode active material according to the present invention can be improved, gas generation can be reduced, and discharge capacity, de-rating, etc. can be improved, thereby completing the present invention. The first layer and the second layer are relatively reduced layers compared to the lithium-rich manganese-based oxide, and are reduced double layers.

On the other hand, when the positive electrode active material does not include the first layer and the second layer, there are problems caused by the structural characteristic that the lithium-rich manganese-based oxide has two mixed phases, and thus the performance of a battery including it is problematic.

According to the present invention, the lithium-rich manganese-based oxide may include at least one doping element selected from Mo, Nb, K, Cl, Na, Ti, Mg, Ru, Ta, and Zr. That is, the lithium-rich manganese-based oxide may be doped with at least one doping element selected from Mo, Nb, K, Cl, Na, Ti, Mg, Ru, Ta, and Zr. When the lithium-rich manganese-based oxide is doped with the doping element, the binding energy between the doping element and oxygen can be increased, thereby suppressing the desorption of oxygen in the positive electrode active material structure, and consequently preventing gas from being generated.

Specifically, when the lithium-rich manganese-based oxide is doped with molybdenum (Mo), not only can the particle size of the positive electrode active material increase, but also the particle shape can be improved. Meanwhile, the molybdenum (Mo) may be doped in an amount of 5,000 ppm or less based on the lithium-rich manganese-based oxide.

According to the present invention, the lithium-rich manganese-based oxide may include a crystal structure belonging to a C2/m space group and an R-3m space group.

According to the present invention, the lithium-rich manganese-based oxide may have a Mn content of 50 mol% or more, specifically 60 mol% or more, and more specifically 65 mol% or more among the total metals excluding lithium. In this case, high capacity can be exhibited even when charged at a high voltage.

According to the present invention, the lithium-rich manganese-based oxide may have a composition represented by Chemical Formula 1 below. In this case, the capacity of $Li_2MnO_3$ can be additionally implemented at a high voltage exceeding 4.4 V, thereby exhibiting excellent capacity characteristics.

[Chemical Formula 1] $\quad\quad\quad Li_aNi_bCo_cMn_dMe_eO_2$

wherein:

Me is at least one selected from Mo, Nb, K, Cl, Na, Ti, Mg, Ru, Ta, and Zr, and
$1.09{\leq}a{\leq}1.20$, $0{\leq}b{\leq}0.50$, $0{\leq}c{\leq}0.10$, $0.50{\leq}d{\leq}1.0$, and $0<e{\leq}0.10$.

The lithium-rich manganese-based oxide may not contain expensive cobalt, and can improve the performance of a lithium secondary battery without containing cobalt.

Chemical Formula 1 above may be expressed as Chemical Formula 2 below:

[Chemical Formula 2] $\quad\quad\quad Li(Li_a{\cdot}Ni_bCo_cMn_dMe_e)O_2$

wherein:

Me is at least one selected from Mo, Nb, K, Cl, Na, Ti, Mg, Ru, Ta, and Zr, and

$0.09 \leq a' \leq 0.20$, $0 \leq b \leq 0.50$, $0 \leq c \leq 0.10$, $0.50 \leq d \leq 1.0$, and $0 < e \leq 0.10$. In this case, the above $a'+b+c+d+e=1$ may be satisfied.

According to the present invention, the lithium-rich manganese-based oxide may be in the form of a secondary particle. In this case, since lithium (Li) diffusion is improved, not only the capacity but also the rate characteristics are superior compared to a single particle. The secondary particle is a secondary structure formed by agglomeration of a plurality of primary particles, and the first layer comprising a crystal structure belonging to an R-3m space group formed continuously according to the present invention and the second layer comprising a rock salt-type crystal structure belonging to an Fm-3m space group formed continuously on the first layer may be formed not only on the secondary particle but also on the primary particle.

According to the present invention, the lithium-rich manganese-based oxide may have an average particle diameter ($D_{50}$) of 5 μm to 15 μm. Specifically, the average particle diameter ($D_{50}$) of the lithium-rich manganese-based oxide may be 5 μm or more, 6 μm or more, or 7 μm or more, and may be 10 μm or less, 11 μm or less, 12 μm or less, 13 μm or less, 14 μm or less, or 15 μm or less. In this case, electrode failure due to particle agglomeration during electrode manufacturing can be prevented.

The positive electrode active material according to the present invention may further include a coating layer formed on the second layer and including at least one selected from carbon and sulfur. Specifically, the coating layer may include at least one selected from a compound including carbon and a compound including sulfur. Here, the carbon may be derived from urea, and the sulfur may be derived from thiourea. The coating layer may be formed not only on the secondary particles of the lithium-rich manganese-based oxide but also on the primary particles.

According to the present invention, the coating layer may further include boron. That is, the coating layer may further include boron in addition to carbon and/or sulfur. Specifically, the coating layer may include at least one selected from a compound containing carbon and a compound containing sulfur, and a compound in which lithium, boron, and oxygen are chemically bonded to each other. When the coating layer includes carbon and boron at the same time, the structural stability of the surface is further improved, so that the formation of a surface denatured layer is suppressed, and as a result, there is an advantage in that the lifespan characteristics of the battery including the positive electrode active material are further improved.

According to the present invention, the first layer may have a thickness of 0.5 nm to 20 nm. Specifically, the thickness of the first layer may be 0.5 nm or more, 1 nm or more, 1.5 nm or more, 2 nm or more, 2.5 nm or more, 3 mm or more, 3.5 nm or more, 4 nm or more, 4.5 nm or more, or 5 nm or more, and 10 nm or less, 11 nm or less, 12 nm or less, 13 nm or less, 14 nm or less, 15 nm or less, 16 nm or less, 17 nm or less, 18 nm or less, 19 nm or less, or 20 nm or less. In this case, there is an advantage in that a high capacity can be maintained while effectively preventing gas generation on the particle surface.

According to the present invention, the second layer may have a thickness of 0.5 nm to 20 nm. Specifically, the thickness of the second layer may be 0.5 nm or more, 1 nm or more, 1.5 nm or more, 2 nm or more, 2.5 nm or more, 3 mm or more, 3.5 nm or more, 4 nm or more, 4.5 nm or more, or 5 nm or more, and 10 nm or less, 11 nm or less, 12 nm or less, 13 nm or less, 14 nm or less, 15 nm or less, 16 nm or less, 17 nm or less, 18 nm or less, 19 nm or less, or 20 nm or less. In this case, there is an advantage in that a high capacity can be maintained while effectively preventing gas generation on the particle surface.

In the specification, the thickness of the first layer and the thickness of the second layer may be values measured through HR-TEM image analysis.

## Method of Manufacturing Positive Electrode Active Material

The present invention provides a method for manufacturing the positive electrode active material described above, the method including the steps of: (A) dry mixing a composite transition metal hydroxide and a lithium-containing raw material, followed by a first calcination at 400°C to 500°C and a second calcination at 800°C to 1000°C to produce a lithium-rich manganese-based oxide; and (B) dry mixing at least one selected from urea and thiourea with the lithium-rich manganese-based oxide by a mechanofusion method, followed by heat treatment at 300°C to 500°C.

## Step (A)

This is a step of (A) dry mixing a composite transition metal hydroxide and a lithium-containing raw material, followed by a first calcination at 400°C to 500°C and a second calcination at 800°C to 1000°C to produce a lithium-rich manganese-based oxide.

The step (A) is a step of dry mixing a composite transition metal hydroxide and a lithium-containing raw material, first calcining at a temperature near the melting point of the lithium-containing raw material, and second calcining at a high temperature so that a lithium-rich layered oxide in which a $Li_2MnO_3$ phase and a $LiMO_2$ phase are mixed is formed. The mixing in the step (A) is a dry mixing, and is performed in a dry manner because the lithium-containing raw material exists in the form of a solid powder. In the case of wet mixing, there is a problem that the process cost is high, so the dry mixing method is used in the present invention.

According to the present invention, when dry mixing the composite transition metal hydroxide and the lithium-containing raw material in the step (A), a doping raw material including at least one doping element selected from Mo, Nb, K, Cl, Na, Ti, Mg, Ru, Ta, and Zr may be further mixed. The doping raw material may be, for example, molybdenum oxide, ammonium molybdate, lithium molybdate, etc.

According to the present invention, the composite transition metal hydroxide may have a composition represented by Chemical Formula 2 below:

$$[\text{Chemical Formula 2}] \qquad Ni_{b'}Co_{c'}Mn_{d'}Me_{e'}(OH)_2$$

wherein:

Me is at least one selected from Mo, Nb, K, Cl, Na, Ti, Mg, Ru, Ta, and Zr, and
$0 \le b' \le 0.50$, $0 \le c' \le 0.10$, $0.50 \le d' \le 1.0$, $0 \le e' \le 0.10$, and $b'+c'+d'+e'=1$.

The composite transition metal hydroxide may not contain expensive cobalt, and can improve the performance of a lithium secondary battery without containing cobalt.

The lithium-containing raw material is a lithium-containing raw material generally used in the manufacture of a positive electrode active material, and may be, for example, lithium carbonate ($Li_2CO_3$), lithium hydroxide (LiOH), $LiNO_3$, $CH_3COOLi$, $Li_2(COO)_2$, or a hydrate thereof.

The composite transition metal hydroxide and the lithium-containing raw material may be mixed in an amount such that the molar ratio of the transition metal present in the composite transition metal hydroxide and the lithium present in the lithium-containing raw material is 1:1.2 to 1.4, specifically 1:1.2 to 1.4, 1:1.2 to 1.35, 1:1.25 to 1.4, 1:1.25 to 1.35, 1:1.3 to 1.4, 1:1.3 to 1.35, or 1.35 to 1.4. In this case, the $Li_2MnO_3$ phase and the $LiMO_2$ phase can be formed simultaneously at an appropriate ratio.

According to the present invention, when the mixture of the composite transition metal hydroxide and the lithium-containing raw material is first calcined at 400°C to 500°C, the lithium-containing raw material can be melted and evenly mixed with the composite transition metal hydroxide. In addition, when the mixture that has undergone the first calcination is subjected to the second calcination at 800°C to 1000°C, a lithium-rich layered oxide in which the $Li_2MnO_3$ phase and the $LiMO_2$ phase are mixed can be well formed.

The first calcination temperature may specifically be 400°C or higher, 410°C or higher, 420°C or higher, 430°C or higher, 440°C or higher, or 450°C or higher, and may be 450°C or lower, 460°C or lower, 470°C or lower, 480°C or lower, 490°C or lower, or 500°C or lower.

The second calcination temperature may specifically be 800°C or higher, 810°C or higher, 820°C or higher, 830°C or higher, 840°C or higher, or 850°C or higher, and 950°C or lower, 960°C or lower, 970°C or lower, 980°C or lower, 990°C or lower, or 1000°C or lower.

Meanwhile, when the first calcination temperature is less than 400°C, there may be a problem that a layered positive electrode material with excellent crystallinity is not formed well because the reaction does not proceed after the composite transition metal hydroxide and the lithium-containing raw material are evenly mixed. When it exceeds 500°C, there may be a problem that the positive electrode material synthesis reaction occurs before the lithium-containing raw material is evenly mixed. In addition, when the second calcination temperature is less than 800°C, the lithium-rich layered oxide may not be completely formed, and when it exceeds 1000°C, particle growth and agglomeration may increase, thereby reducing the electrochemical characteristics.

According to the present invention, the first calcination and the second calcination may be each independently performed under an atmospheric atmosphere or an oxygen atmosphere.

The first calcination may be performed for 3 to 5 hours, and the second calcination may be performed for 10 to 15 hours.

**Step (B)**

This is a step of (B) dry mixing at least one selected from urea and thiourea with the lithium-rich manganese-based oxide by a mechanofusion method, and then heat-treating at 300°C to 500°C. When at least one selected from urea and thiourea and the lithium-rich manganese-based oxide are dry mixed by a mechanofusion method, and then heat-treated within the above temperature range, urea and/or thiourea undergo thermal decomposition, and ammonium gas is generated during the decomposition process to form a reducing atmosphere, which reduces the surface layer of the lithium-rich manganese-based oxide, thereby causing surface modification. Accordingly, a first layer comprising a crystal structure belonging to an R-3m space group and a second layer comprising a rock salt-type crystal structure belonging to an Fm-3m space group, i.e., a reduced double layer, are formed on the lithium-rich manganese-based oxide.

In addition, since the urea has a carbonyl group (C(=O) group), it is carbonized while undergoing thermal decomposition under a nitrogen ($N_2$) atmosphere, thereby forming a coating layer including carbon on the lithium-rich manganese-based oxide. In addition, since the thiourea has a C(=S) group, it is thermally decomposed under a nitrogen ($N_2$) atmosphere, thereby forming a coating layer including sulfur on the lithium-rich manganese-based oxide. In this case, the coating layer including carbon or the coating layer including sulfur may be formed on the surface (outermost) of the positive electrode active material. That is, it may be formed on the second layer.

According to the present invention, the dry mixing is performed by a mechanofusion method, and accordingly, while the base material and the coating raw material are mixed, impact/compression/shear is uniformly transmitted to each particle at the same time, so that the coating can proceed uniformly. On the other hand, when the dry mixing is performed by a method such as a ball mill, only the process of simply mixing the base material and the coating raw material occurs.

According to the present invention, in the step (B), the at least one selected from urea and thiourea may be mixed in an amount of 0.3 to 3 parts by weight based on 100 parts by weight of the lithium-rich manganese-based oxide. Specifically, the at least one selected from urea and thiourea may be mixed in an amount of 0.3 parts by weight or more, 0.4 parts by weight or more, 0.5 parts by weight or more, 0.6 parts by weight or more, 0.7 parts by weight or more, 0.8 parts by weight or more, 0.9 parts by weight or more, or 1.0 parts by weight or more, and 2.0 parts by weight or less, 2.1 parts by weight or less, 2.2 parts by weight or less, 2.3 parts by weight or less, 2.4 parts by weight or less, 2.5 parts by weight or less, 2.6 parts by weight or less, 2.7 parts by weight or less, 2.8 parts by weight or less, 2.9 parts by weight or less, or 3.0 parts by weight or less, based on 100 parts by weight of the lithium-rich manganese-based oxide. In this case, a stable surface layer with improved structural stability can be formed without decreasing the capacity.

According to the present invention, the heat treatment may be performed under an $N_2$ atmosphere to form a reducing atmosphere through thermal decomposition.

According to the present invention, the heat treatment in the step (B) may be performed at 300°C to 550°C. Specifically, the heat treatment temperature may be 300°C or higher, 310°C or higher, 320°C or higher, 330°C or higher, 340°C or higher, 350°C or higher, 360°C or higher, 370°C or higher, 380°C or higher, 390°C or higher, or 400°C or higher, and 450°C or lower, 460°C or lower, 470°C or lower, 480°C or lower, 490°C or lower, 500°C or lower, 510°C or lower, 520°C or lower, 530°C or lower, 540°C or lower, or 550°C or lower. In this case, a stable surface layer (reduced double layer and coating layer) with improved structural stability can be formed without decreasing the capacity.

Meanwhile, if the heat treatment temperature is less than 300°C, the urea and/or thiourea are not properly thermally decomposed, so the surface modification layer is not properly formed, and if it exceeds 500°C, there is a problem that the carbon coating is not properly formed because the carbon burns at a high temperature.

The heat treatment may be performed for 3 to 5 hours.

According to the present invention, when dry mixing the at least one selected from urea and thiourea with the lithium-rich manganese-based oxide in the step (B), a boron-containing raw material may be further mixed. The boron-containing raw material may be, for example, boric acid, $B_2O_3$, etc.

According to the present invention, the boron-containing raw material may be mixed in an amount of 0.2 to 2 parts by weight based on 100 parts by weight of the lithium-rich manganese-based oxide. Specifically, the boron-containing raw material may be mixed in an amount of 0.2 parts by weight or more, 0.3 parts by weight or more, 0.4 parts by weight or more, 0.5 parts by weight or more, and 0.8 parts by weight or less, 0.9 parts by weight or less, 1.0 parts by weight or less, 1.1 parts by weight or less, 1.2 parts by weight or less, 1.3 parts by weight or less, 1.4 parts by weight or less, 1.5 parts by weight or less, 1.6 parts by weight or less, 1.7 parts by weight or less, 1.8 parts by weight or less, 1.9 parts by weight or less, or 2.0 parts by weight or less, based on 100 parts by weight of the lithium-rich manganese-based oxide. In this case, a coating layer including boron and at least one selected from carbon and sulfur and having an appropriate thickness can be formed.

**Positive Electrode**

The present invention provides a positive electrode including the positive electrode active material.

The positive electrode may include a positive electrode current collector and a positive electrode active material layer formed on the positive electrode current collector, wherein the positive electrode active material layer may include the positive electrode active material.

The positive electrode current collector may include a highly conductive metal, and is not particularly limited as long as the positive electrode active material layer can be easily adhered thereto and is non-reactive within the voltage range of the battery. The positive electrode current collector may be, for example, stainless steel, aluminum, nickel, titanium, calcined carbon, or aluminum or stainless steel having a surface treated with carbon, nickel, titanium, silver, etc. In addition, the positive electrode current collector may typically have a thickness of 3 $\mu$m to 500 $\mu$m, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

The positive electrode active material layer, along with the positive electrode active material, may optionally include a conductive material and a binder, if necessary. In this case, the positive electrode active material may be included in an amount of 80% to 99% by weight, more specifically 85% to 98.5% by weight, based on the total weight of the positive electrode active material layer, and can exhibit excellent capacity characteristics within this range.

The conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive tube such as carbon nanotube; a conductive whisker such as zinc oxide and potassium titanate; a conductive metal oxide such as a titanium oxide; or a conductive polymer such as a polyphenylene derivative, and any one or a mixture of two or more thereof may be used. The conductive material may be included in an amount of 0.1% by weight to 15% by weight based on the total weight of the positive electrode active material layer.

The binder serves to improve the bonding between the positive electrode active material particles and the adhesion between the positive electrode active material and the current collector. Specific examples thereof may include polyvinylidene fluoride (PVDF), polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber (SBR), fluorine rubber, polyacrylic acid, the polymers in which hydrogen is substituted with Li, Na, or Ca, or various copolymers thereof, and any one or a mixture of two or more thereof may be used. The binder may be included in an amount of 0.1% by weight to 15% by weight based on the total weight of the positive electrode active material layer.

The positive electrode may be manufactured according to a conventional positive electrode manufacturing method except for the use of the positive electrode active material described above. Specifically, the above positive electrode active material and, if necessary, a binder, a conductive material, and a dispersant may be dissolved or dispersed in a solvent to prepare a composition for forming a positive electrode active material layer, which may be applied on a positive electrode current collector, and then dried and rolled to manufacture the positive electrode. Alternatively, the positive electrode may be manufactured by casting a composition for forming a positive electrode active material layer on a separate support, peeling off the support to obtain a film, and laminating the film on a positive electrode current collector.

The solvent may be any solvent commonly used in the art, for example, dimethyl sulfoxide (DMSO), isopropyl alcohol, N-methyl pyrrolidone (NMP), dimethylformamide (DMF), acetone, water, or the like, and any one or a mixture of two or more thereof may be used. The solvent may be used in an amount sufficient to dissolve or disperse the positive electrode active material, conductive material, binder, and dispersant in consideration of the application thickness of the slurry and the manufacturing yield, and to allow the slurry to have a viscosity capable of exhibiting excellent thickness uniformity when applied for the subsequent positive electrode production.

**Lithium Secondary Battery**

The present invention provides a lithium secondary battery including the positive electrode described above.

The lithium secondary battery may include: the positive electrode; a negative electrode; and a separator and an electrolyte interposed between the positive electrode and the negative electrode. In addition, the lithium secondary battery may optionally further include a battery container for accommodating an electrode assembly formed of the positive electrode, negative electrode, and separator, and a sealing member for sealing the battery container.

The negative electrode may include a negative electrode current collector and a negative electrode active material layer disposed on the negative electrode current collector.

The negative electrode current collector is not particularly limited as long as it has a high conductivity without causing a chemical change in a battery, and may be, for example, copper, stainless steel, aluminum, nickel, titanium, calcined carbon, copper or stainless steel that is surface-treated with carbon, nickel, titanium, silver, or the like, an aluminum-cadmium alloy, or the like. Additionally, the negative electrode current collector may typically have a thickness of 3 $\mu$m to 500 $\mu$m, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The negative electrode active material layer may optionally include a binder and a conductive material along with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as $SiO_\beta$ (0<$\beta$<2), $SnO_2$, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes. The negative electrode active material may be included in an amount of 80% to 99% by weight based on the total weight of the negative electrode active material layer.

The binder of the negative electrode active material layer is a component that assists in bonding between the conductive material, the active material, and the current collector, and is usually added in an amount of 0.1% to 10% by weight based on the total weight of the negative electrode active material layer. Examples of such binders include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

The conductive material of the negative electrode active material layer is a component to further improve the conductivity of the negative electrode active material, and may be added in an amount of 10% by weight or less, preferably 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide and potassium titanate; conductive metal oxides such as titanium oxide; conductive materials such as polyphenylene derivatives.

The negative electrode active material and optionally a binder and a conductive material may be dissolved or dispersed in a solvent to prepare a composition for forming a negative electrode active material layer, which may be applied on a negative electrode current collector and dried to produce the negative electrode. Alternatively, the negative electrode may be manufactured by casting the composition for forming a negative electrode active material layer on a separate support, peeling a film from the support, and then laminating the film on a negative electrode current collector.

The separator is to separate the negative electrode and the positive electrode, and to provide a passage for lithium ions to move. Any separator may be used without particular limitation as long as it is generally used as a separator in the lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous non-woven fabric, for example, a non-woven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multilayer structure.

The electrolyte may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto. As a specific example, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethylcarbonate (MEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic hydrocarbon group having 2 to 20 carbon atoms, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable.

The lithium salt may be any compound without particular limitation as long as it can provide lithium ions used in a lithium secondary battery. Specifically, the anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, and the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like. The lithium salt is preferably used at a concentration ranging from 0.1 M to 2.0 M. When the concentration of the lithium salt is within the above range, the electrolyte has an appropriate conductivity and viscosity, whereby excellent electrolyte performance can be exhibited, and lithium ions can effectively move.

In order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

Since the lithium secondary battery including the positive electrode active material according to the present invention stably exhibits excellent capacity characteristics, output characteristics, and lifespan characteristics, it is useful in the field of portable devices such as mobile phones, laptop computers, digital cameras, and electric vehicles such as hybrid electric vehicle (HEV) and electric vehicle (EV).

The external shape of the lithium secondary battery of the present invention is not particularly limited, but may be a cylindrical type using a can, a prismatic type, a pouch type, or a coin type.

The lithium secondary battery according to the present invention can not only be used in battery cells used as a power source for small devices, but can also be preferably used as a unit cell in medium to large-sized battery modules containing multiple battery cells.

Accordingly, a battery module including the lithium secondary battery as a unit cell and a battery pack including the same are provided.

The battery module or battery pack may be used as a power source for any one or more medium and large-sized devices among a power tool; electric vehicles, including electric vehicles (EV), hybrid electric vehicles, and plug-in hybrid electric vehicles (PHEV); or a system for power storage.

**[Modes for Carrying Out the Invention]**

Hereinafter, examples of the present invention will be described in detail so that those skilled in the art can easily perform the present invention. However, the present invention may be embodied in a variety of forms and is not limited to the examples described herein.

**Preparation Example**

**Preparation Example 1**

Manganese sulfate ($MnSO_4$) and nickel sulfate ($NiSO_4$) were mixed in distilled water in an amount such that the molar ratio of Mn:Ni was 65:35, thereby preparing an aqueous transition metal solution having a concentration of 2.0 M. A coprecipitation reaction was performed while adding a 4 M NaOH aqueous solution and a 15.3 M $NH_4OH$ aqueous solution to the above aqueous transition metal solution to maintain the pH at about 11. Thereafter, the precipitate was separated and washed, and dried at 120°C for 24 hours to prepare a composite transition metal hydroxide having a composition represented by $Ni_{0.65}Mn_{0.35}(OH)_2$.

**EXAMPLES**

Example 1 (Urea-coated LMRO)

The composite transition metal hydroxide prepared in Preparation Example 1 and $LiOH \cdot H_2O$ were mixed so that the ratio of the total mole number of transition metals (Ni+Mn) included in the composite transition metal hydroxide and the mole number of lithium (Li) included in LiOH ((Ni+Mn):Li) was 1:1.35, followed by a first calcination at 450°C for 5 hours under an atmospheric atmosphere and a second calcination at 900°C for 12 hours to produce a lithium-rich manganese-based oxide (composition: $Li_{1.13}Ni_{0.3}Mn_{0.57}O_2$, average particle diameter ($D_{50}$): 7 $\mu$m).

By a mechanofusion method, the lithium-rich manganese-based oxide was mixed with urea (Sigma Aldrich) in an amount of 2 parts by weight based on 100 parts by weight of the lithium-rich manganese-based oxide, and then heat-treated at 400°C for 5 hours under a $N_2$ atmosphere to manufacture a positive electrode active material having a coating layer formed.

For reference, the mechanofusion was performed using Hosokawa Micron's Novilta, and performed by placing a 50 g batch of raw materials (lithium-rich manganese-based oxide + urea) in a mixing container and rotating the rotor at 1 A, 2000 rpm, and 5 L/min under a $N_2$ atmosphere.

**Example 2 (Mo-doped/urea-coated LMRO)**

The composite transition metal hydroxide prepared in Preparation Example 1 and LiOH·$H_2O$ were mixed so that the ratio of the total mole number of transition metals (Ni+Mn) included in the composite transition metal hydroxide and the mole number of lithium (Li) included in LiOH ((Ni+Mn):Li) was 1:1.35, and $MoO_3$ (Sigma Aldrich) was further mixed in an amount of 0.5 mol% relative to the composite transition metal hydroxide, followed by a first calcination at 450°C for 5 hours under an atmospheric atmosphere and a second calcination at 900°C for 12 hours to produce a lithium-rich manganese-based oxide (composition: $Li_{1.13}(Ni_{0.3}Mn_{0.57})_{0.994}Mo_{0.005}O_2$, average particle diameter ($D_{50}$): 7 $\mu$m).

By a mechanofusion method, the lithium-rich manganese-based oxide was mixed with urea in an amount of 2 parts by weight based on 100 parts by weight of the lithium-rich manganese-based oxide, and then heat-treated at 400°C for 5 hours under a $N_2$ atmosphere to manufacture a positive electrode active material having a coating layer formed.

For reference, the mechanofusion was performed using Hosokawa Micron's Novilta, and performed by placing a 50 g batch of raw materials (lithium-rich manganese-based oxide + urea) in a mixing container and rotating the rotor at 1 A, 2000 rpm, and 5 L/min under a $N_2$ atmosphere.

**Example 3 (Mo-doped/urea,B-coated LMRO)**

By a mechanofusion method, the lithium-rich manganese-based oxide prepared in Example 2 was mixed with urea in an amount of 2 parts by weight based on 100 parts by weight of the lithium-rich manganese-based oxide, and further mixed with boric acid ($H_3BO_3$) (Sigma Aldrich) in an amount of 0.57 parts by weight based on 100 parts by weight of the lithium-rich manganese-based oxide, and then heat-treated at 400°C for 5 hours under a $N_2$ atmosphere to manufacture a positive electrode active material having a coating layer formed.

For reference, the mechanofusion was performed using Hosokawa Micron's Novilta, and performed by placing a 50 g batch of raw materials (lithium-rich manganese-based oxide + urea) in a mixing container and rotating the rotor at 1 A, 2000 rpm, and 5 L/min under a $N_2$ atmosphere.

**Example 4 (Thiourea-coated LMRO)**

The lithium-rich manganese-based oxide prepared in Example 1 was mixed with thiourea (Sigma Aldrich) in an amount of 2 parts by weight based on 100 parts by weight of the lithium-rich manganese-based oxide, and then heat-treated at 400°C for 5 hours under a $N_2$ atmosphere to manufacture a positive electrode active material having a coating layer formed.

**Example 5 (Mo-doped/thiourea-coated LMRO)**

The lithium-rich manganese-based oxide prepared in Example 2 was mixed with thiourea in an amount of 2 parts by weight based on 100 parts by weight of the lithium-rich manganese-based oxide, and then heat-treated at 400°C for 5 hours under a $N_2$ atmosphere to manufacture a positive electrode active material having a coating layer formed.

**Comparative Example 1 (Bare LMRO)**

The lithium-rich manganese-based oxide prepared in Example 1 was used as the positive electrode active material of Comparative Example 1.

**Comparative Example 2 (Mo-doped LMRO)**

The lithium-rich manganese-based oxide prepared in Example 2 was used as the positive electrode active material of Comparative Example 2.

**Comparative Example 3**

The composite transition metal hydroxide prepared in Preparation Example 1 and LiOH·H$_2$O were mixed so that the ratio of the total mole number of transition metals (Ni+Mn) included in the composite transition metal hydroxide and the mole number of lithium (Li) included in LiOH ((Ni+Mn):Li) was 1:1.35, followed by a first calcination at 450°C for 5 hours under an atmospheric atmosphere and a second calcination at 900°C for 12 hours to produce a lithium-rich manganese-based oxide (composition: Li$_{1.13}$Ni$_{0.3}$Mn$_{0.57}$O$_2$, average particle diameter (D$_{50}$): 7 μm).

The lithium-rich manganese-based oxide was mixed with urea (Sigma Aldrich) in an amount of 2 parts by weight based on 100 parts by weight of the lithium-rich manganese-based oxide using a ball mill, and then heat-treated at 400°C for 5 hours under a N$_2$ atmosphere to manufacture a positive electrode active material having a coating layer formed.

For reference, the ball mill mixing was performed at 300 rpm for 12 hours after zirconia balls and powders were loaded into a Nalzen bottle at a weight ratio of 10:1.

**Reference Example 1 (NCMA positive electrode active material)**

Lithium nickel cobalt manganese aluminum oxide having a composition of LiNi$_{0.86}$Co$_{0.05}$Mn$_{0.07}$Al$_{0.02}$O$_2$ and an average particle diameter (D$_{50}$) of 10 μm was used as the positive electrode active material of Reference Example 1.

**Experimental Example**

**Experimental Example 1: Analysis of STEM-EELS Data**

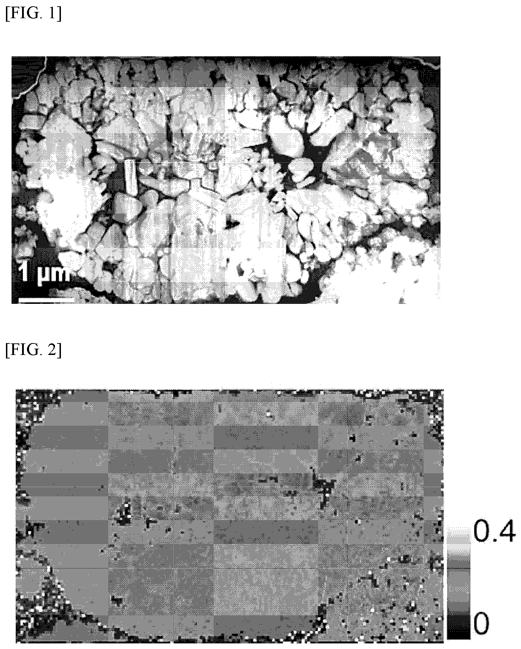

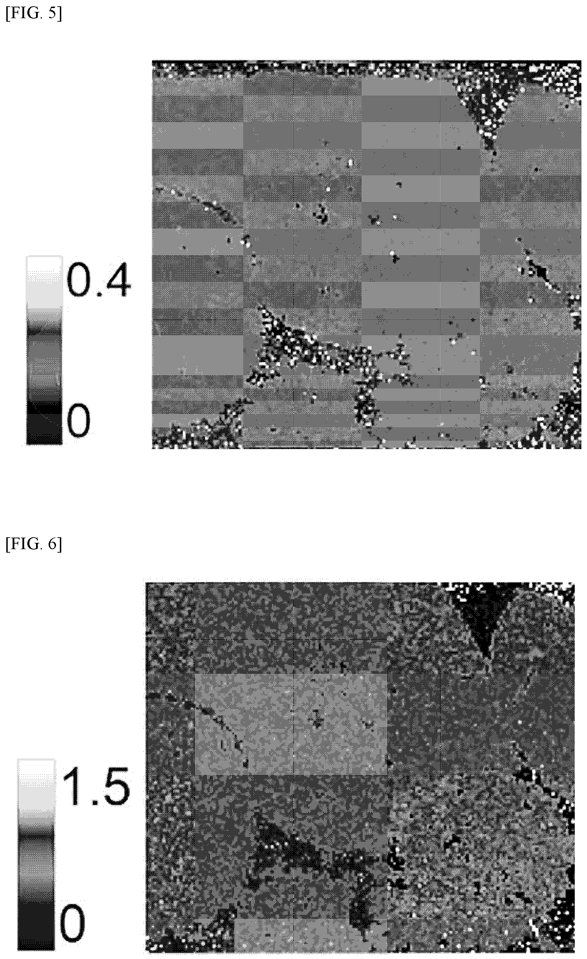

For the electrodes including each of the positive electrode active materials manufactured in Example 5 and Comparative Example 1, electron energy loss spectroscopy (EELS) was performed, and then the EELS-related data were shown in FIGS. 1 to 8.

Specifically, thin samples for STEM-EELS analysis were prepared using TFS Helios 5 UX (acceleration voltages of 30, 5, and 2 kW), and HAADF-STEM images and EELS maps were obtained at an acceleration voltage of 200 kV using TFS Spectra 300 STEM, and the degree of reduction of Mn was confirmed from the obtained maps to confirm the presence of a reduced layer. In this case, the dispersion was 0.15 eV/ch, the aperture of the GIF (Gatan Image Filter) camera was 1 mm, and the full width half maximum (FWHM) of the zero-loss peak for each image pixel was 0.7 to 0.85 eV.

FIGS. 1 to 8 are diagrams showing HAADF-STEM images, a/I$_{MnL3}$ ratio maps, O K pre-edge/main edge ratio maps, and EELS analysis data of the cross-sections of each of the positive electrode active materials manufactured in Example 5 and Comparative Example 1.

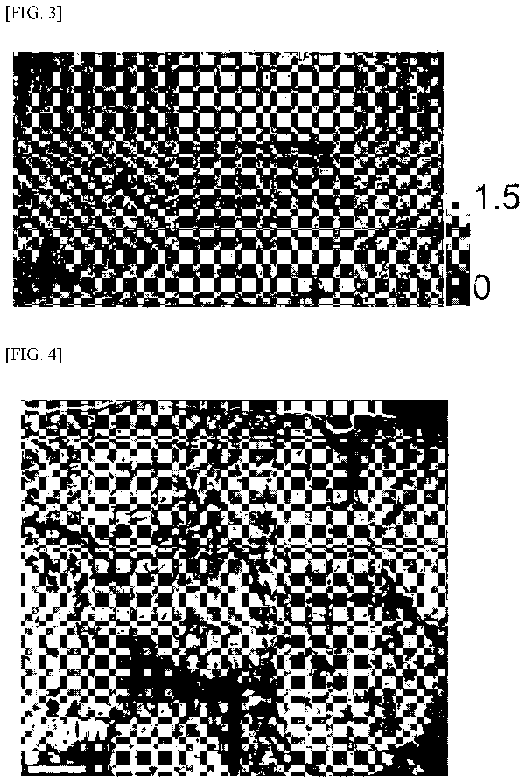

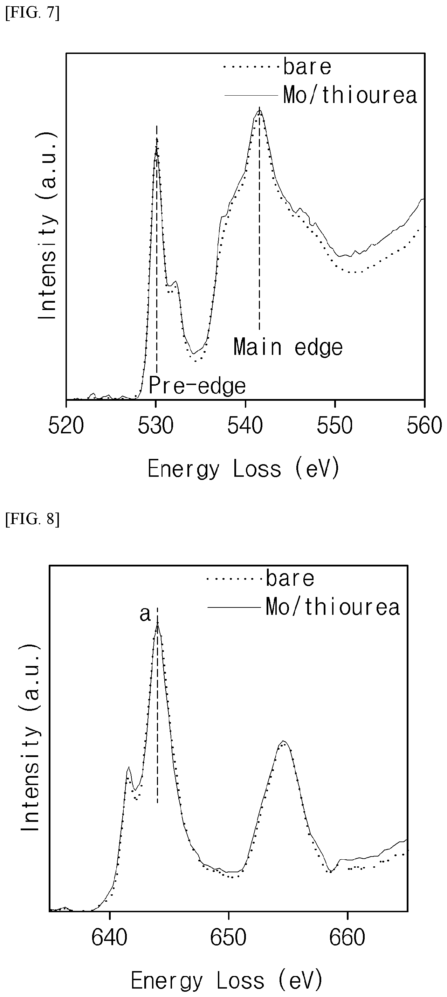

Specifically, FIGS. 1, 2, and 3 are HAADF-STEM images, a/I$_{MnL3}$ ratio maps, and O K pre-edge/main edge ratio maps, respectively, of the cross-section of the positive electrode active material manufactured in Example 5; FIGS. 4, 5, and 6 are HAADF-STEM images, a/I$_{MnL3}$ ratio maps, and O K pre-edge/main edge ratio maps, respectively, of the cross-section of the positive electrode active material manufactured in Comparative Example 1; FIG. 7 is EELS analysis data of the O K edge; and FIG. 8 is EELS analysis data of the Mn L$_3$ edge.

Meanwhile, the O K pre/main edge ratio map and the a/I$_{MnL3}$ ratio map in the EELS map were obtained by the following method.

Specifically, the background was removed from the EELS map to remove noise; the O K pre edge signal (hereinafter referred to as O K pre edge) at about 530 eV, the 0 K main edge signal (hereinafter referred to as 0 K main edge) at about 541 to 542 eV, the edge signal corresponding to the main peak of Mn$^{4+}$ at about 644 eV (hereinafter referred to as a), and the integral signal (hereinafter referred to as I$_{MnL3}$) of all L$_3$ peaks (L$_3$ edge) of Mn existing between 635 eV and 650 eV were obtained; the colors were expressed differently according to the ratio values of the O K pre edge to the 0 K main edge to be represented as an O K pre/main edge ratio map; and the colors were expressed differently according to the ratio values of a to I$_{MnL3}$ to be represented as an a/I$_{MnL3}$ ratio map.

In this case, the background was set by ~20 eV in front of ~10 eV from the L$_3$ edge onset point in the case of Mn L$_3$, and by ~20 eV in front of the onset point in the case of O K edge. In addition, when obtaining an edge signal from a peak, an integral signal corresponding to a width (breadth) of 0.75 eV was obtained while including the peak, and when obtaining an integral signal of the L$_3$ edge, the integral signal was obtained by being set by a width of 10.05 eV so that the entire L$_3$ edge was included.

Referring to FIGS. 1 to 8, it can be confirmed that in the case of Example 5, the O K pre-edge/main edge ratio is low for the entire secondary particle, and among all the L$_3$ peaks of Mn, particularly, the intensity of a peak, which is the main peak of Mn$^{4+}$, is slightly low.

This is because the reduction layer was uniformly formed on the surface of the primary particle.

**Experimental Example 2: Analysis of HR-TEM Images**

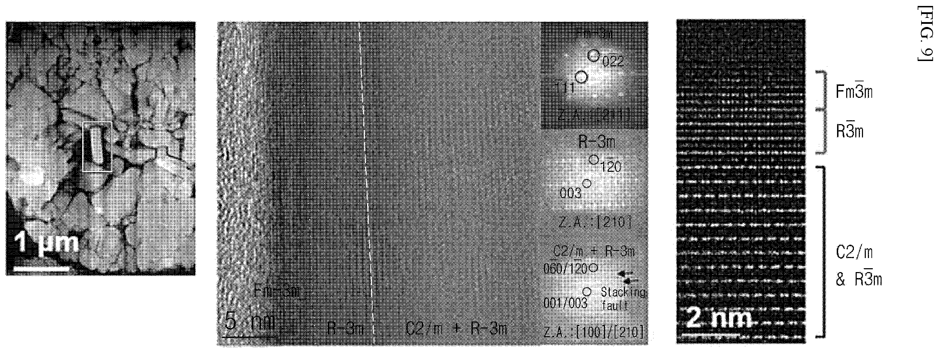

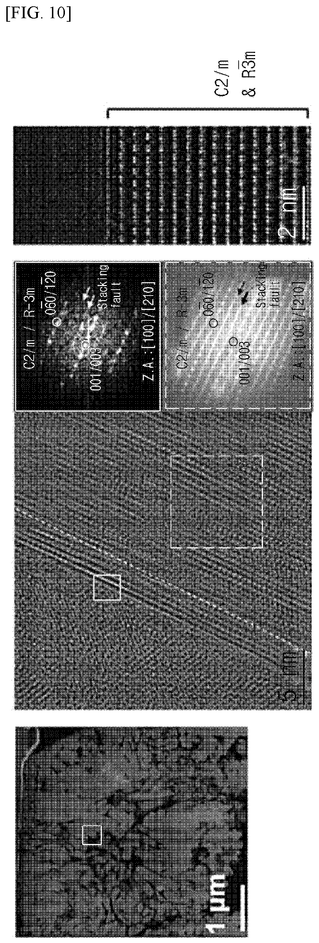

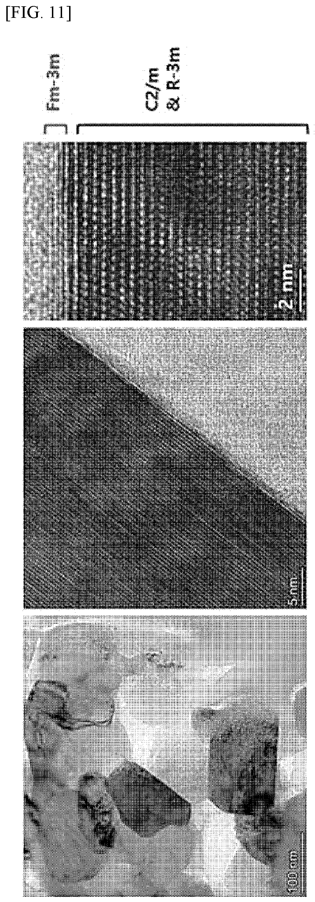

For each of the positive electrode active materials manufactured in Example 5, Comparative Example 1, and Comparative Example 3, HR-(S)TEM image analysis was performed, and the images were shown in FIGS. 9 to 11.

The HR-(S)TEM analysis was specifically measured using a Spectra 300 (w/ double Cs corrector, monochromator) from Thermo Fisher Scientific at an acceleration voltage of 200 kV, and the STEM was measured under the condition of screen current ~20 pA.

FIGS. 9, 10, and 11 are diagrams showing an HR-TEM image (left) and an HR-STEM image (right) measured by enlarging a primary particle surface in cross-sectional samples of the positive electrode active materials manufactured in Example 5, Comparative Example 1, and Comparative Example 2, respectively.

Referring to FIGS. 9 to 11, it can be confirmed that in the case of the positive electrode active material of Example 5, a first layer comprising a crystal structure belonging to an R-3m space group and a second layer formed on the first layer and comprising a rock salt-type crystal structure belonging to an Fm-3m space group are formed. In addition, it can be confirmed that the first layer and the second layer are formed continuously. In contrast, it can be confirmed that in the case of the positive electrode active material of Comparative Example 1, the first layer and the second layer according to the present invention do not exist, and in the case of the positive electrode active material of Comparative Example 3, the first layer according to the present invention does not exist. That is, when looking at the primary particle surface of FIGS. 9 to 11, it can be confirmed that a double reduction layer was formed in the case of Example 5, but a double reduction layer does not exist in the cases of Comparative Examples 1 and 3.

For reference, the reason why a difference in the thickness of the first layer and the second layer appears in the HR-TEM image and HR-STEM image of Example 5 is because the STEM image mainly reflects information on the particle surface.

**Experimental Example 3: EDS Analysis**

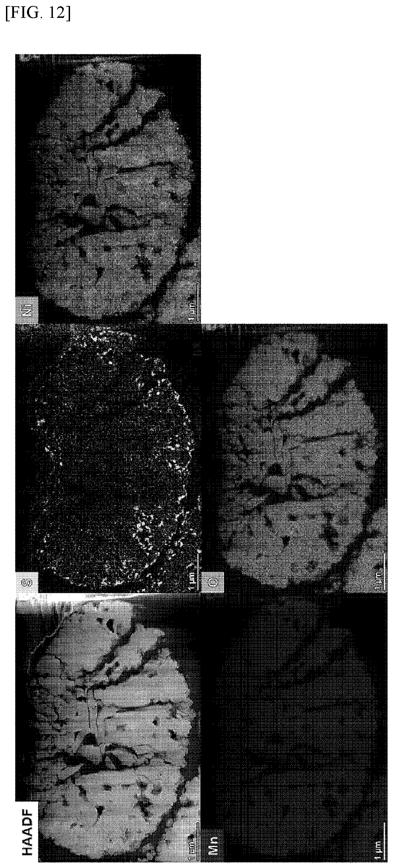

HAADF-STEM images and EDS data of the cross-section of the positive electrode active material manufactured in Example 5 were obtained using a TFS Spectra300, quadruple EDS detector (acceleration voltage: 200 kV), and were shown in FIG. 12.

As a result of the EDS analysis, it can be confirmed that sulfur (S) is coated on the surface of the secondary particles and primary particles of the positive electrode active material.

**Experimental Example 4: Evaluation of Battery Characteristics**

**Evaluation of gas generation amount**

92.5 wt% of each of the positive electrode active materials manufactured in Examples 1 to 5, Comparative Examples 1 and 2, and Reference Example 1, 3 wt% of carbon black as a conductive material, and 4.5 wt% of polyvinylidene fluoride (PVDF) as a binder were mixed in an N-methylpyrrolidone (NMP) solvent to prepare a positive electrode slurry. The positive electrode slurry was coated on one surface of an aluminum current collector, dried at 130°C, and rolled to prepare a positive electrode.

An electrode assembly was manufactured by using graphite as a negative electrode and interposing a porous polyethylene separator between the negative electrode and the positive electrode. The electrode assembly was placed inside a battery case, and an electrolyte (additive: $LiBF_4$ 2% and FEC 5%) obtained by dissolving 1M $LiPF_6$ in an organic solvent having ethylene carbonate (EC): ethyl methyl carbonate (EMC) mixed at a volume ratio of 3:7 was injected to prepare a monocell.

1) Evaluation of gas generation amount during charging and discharging

The monocell was charged to 4.65 V under the condition of CC (0.1 C)-CV (Cut off current: 0.05 C) at 45°C, and then discharged to 2.0 V at 0.1 C (first cycle) to perform the formation process. The monocell subjected to the above formation process was charged to 4.4 V under the condition of CC (0.1 C)-CV (Cut off current: 0.05 C) at 25°C, and then discharged to 2.5 V at 0.1 C (second cycle). Then, it was charged to 4.4 V under the condition of CC (0.33 C)-CV (Cut off current: 0.05 C) at 25°C, and then discharged to 2.5 V at 0.33 C, which was taken as one cycle and repeated 48 times, so that a total of 50 cycles of charging and discharging were performed.

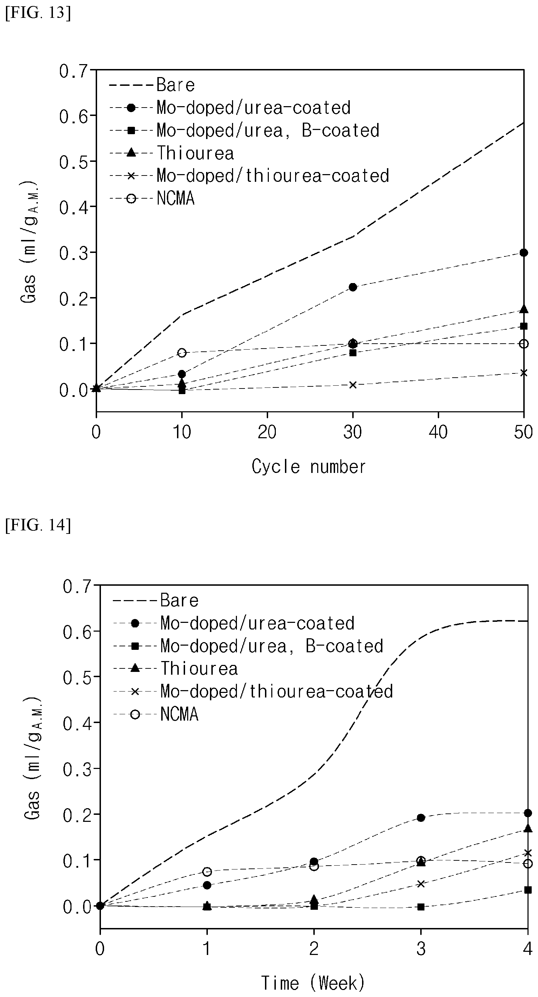

In addition, the amount of gas generated during the 50 cycles was measured using a hydrometer (MATSUHAKU, TWD-150DM), and the results were shown in Table 1 below and FIG. 13. A difference between the original weight of the monocell and the weight in water was measured, a volume change in the monocell was calculated, and the volume change (ml) was divided by the weight (g) of the positive electrode active material to calculate the amount of gas generated per 1 g of the positive electrode active material.

[Table 1]

| Division | Amount of gas generated during 50 cycles (ml/g) | Rate of increase/decrease compared to Comparative Example 1 in 50 cycles |
|---|---|---|
| Example 1 | 0.342 | -40.1 |
| Example 2 | 0.298 | -48.5 |
| Example 3 | 0.137 | -76.3 |
| Example 4 | 0.130 | -77.5 |
| Example 5 | 0.033 | -94.3 |
| Comparative Example 1 | 0.579 | - |
| Comparative Example 2 | 0.411 | -29.0 |
| Reference Example 1 | 0.104 | -82.0 |

2) Evaluation of gas generation amount during high-temperature storage

The monocell was charged to 4.65 V under the condition of CC(0.1C)-CV(Cut off current: 0.05C) at 45°C, discharged to 2.0 V at 0.1C, and charged to 4.4 V under the condition of CC(0.1C)-CV(Cut off current: 0.05C) at 25°C. Thereafter, the generated gas was degassed and removed, and then the monocell was recovered and stored in a chamber at 60°C. After two weeks of storage, the monocell was taken out of the chamber at one-week intervals. A difference between the original weight of the monocell and the weight in water was measured using a hydrometer (MATSUHAKU, TWD-150DM), a volume change in the monocell was calculated, and the volume change (ml) was divided by the weight (g) of the positive electrode active material to calculate the amount of gas generated per 1 g of the positive electrode active material. The results were shown in Table 2 below and FIG. 14.

[Table 2]

| Division | Amount of gas generated during storage (ml/g) | | | Rate of increase/decrease compared to Comparative Example 1 |
|---|---|---|---|---|
| | 2 weeks | 3 weeks | 4 weeks | |
| Example 1 | 0.055 | 0.156 | 0.142 | -77.1 |
| Example 2 | 0.094 | 0.192 | 0.203 | -67.3 |
| Example 3 | 0 | 0 | 0.098 | -84.2 |
| Example 4 | 0.011 | 0.096 | 0.167 | -73.1 |
| Example 5 | 0 | 0.049 | 0.109 | -82.4 |
| Comparative Example 1 | 0.289 | 0.585 | 0.621 | - |
| Comparative Example 2 | 0.152 | 0.389 | 0.491 | -20.1 |
| Reference Example 1 | 0.084 | 0.098 | 0.091 | -85.3 |

Referring to Table 1, Table 2, FIG. 13, and FIG. 14, it can be confirmed that in the case of the batteries including the positive electrode active materials manufactured in Examples 1 and 2, since they have uniform first and second layers formed continuously, the amount of gas generated during repeated charging/discharging cycles at high temperatures, and also the amount of gas generated when stored at high temperatures for a long period of time, is less compared to the battery including the positive electrode active material manufactured in Comparative Example 1.

That is, it can be seen that the positive electrode active material according to the present invention has uniform first and second layers, and thus can improve the stability of the battery when applied to the battery.

**Electrochemical Performance Evaluation**

92.5 wt% of each of the positive electrode active materials manufactured in the above examples and comparative examples, 3 wt% of carbon black as a conductive material, and 4.5 wt% of polyvinylidene fluoride (PVDF) as a binder were mixed in an N-methylpyrrolidone (NMP) solvent to prepare a positive electrode slurry. The positive electrode slurry was coated on one surface of an aluminum current collector, dried at 130°C, and rolled to prepare a positive electrode.

An electrode assembly was manufactured by using a lithium metal electrode as a negative electrode and interposing a porous polyethylene separator between the positive electrode and the negative electrode. The electrode assembly was placed inside a battery case, and an electrolyte (additive: $LiBF_4$ 2% and FEC 5%) obtained by dissolving 1M $LiPF_6$ in an organic solvent having ethylene carbonate (EC): ethyl methyl carbonate (EMC) mixed at a volume ratio of 3:7 was injected to prepare a half cell.

The half cell was charged to 4.65 V under the condition of CC (0.1 C)-CV (Cut off current: 0.05 C) at 45°C, and then discharged to 2.0 V at 0.1 C (hereinafter, "formation cycle") to perform the formation process. The half cell subjected to the above formation process was charged to 4.4 V under the condition of CC (0.1 C)-CV (Cut off current: 0.05 C) at 25°C, and then discharged to 2.5 V at 0.1 C (hereinafter, 0th cycle). Then, it was charged to 4.4 V under the condition of CC (0.33 C)-CV (Cut off current: 0.05 C) at 25°C, and then discharged to 2.5 V at 0.33 C, which was taken as one cycle and repeated 50 times (1st cycle to 50th cycle).

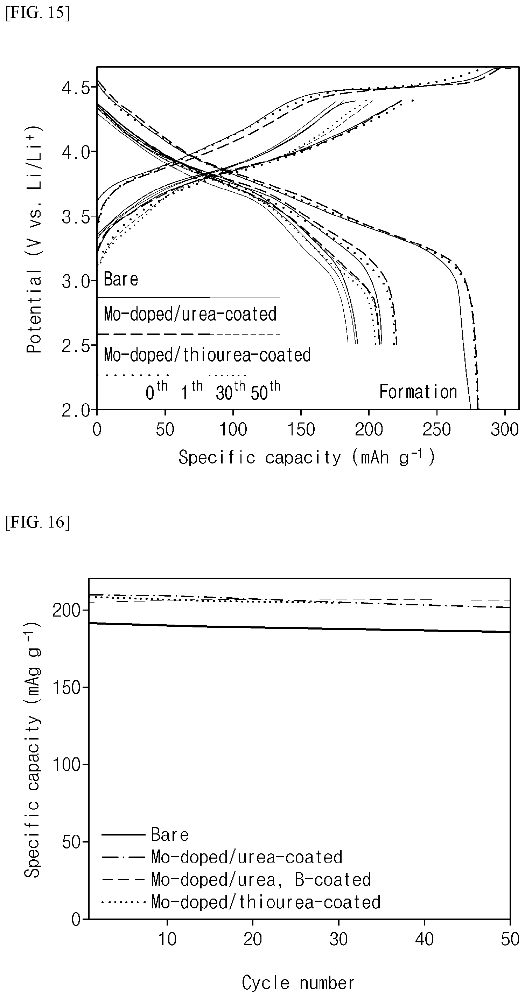

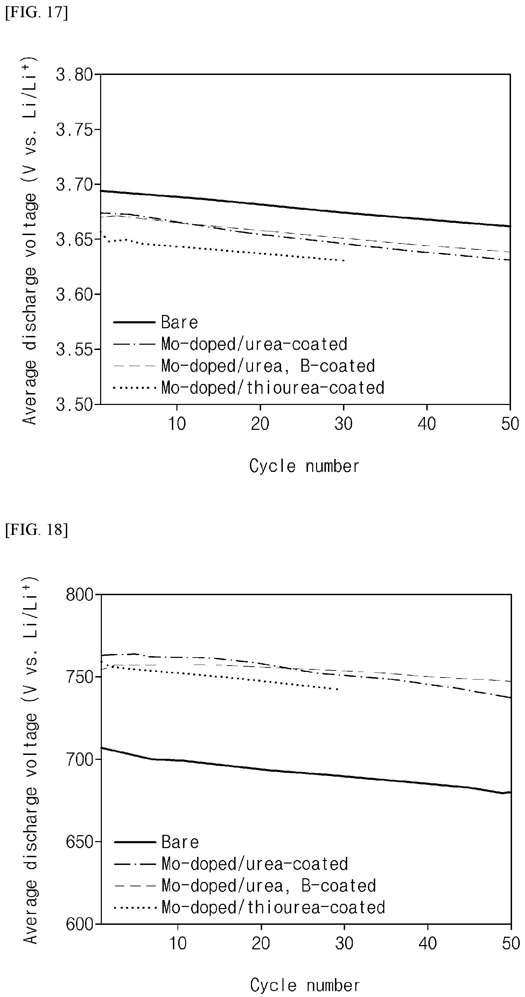

In this case, the charge/discharge profile graph (FIG. 15), specific capacity graph (FIG. 16), average discharge voltage graph (FIG. 17), and energy density graph (FIG. 18) according to the repetition of the cycle were shown in FIGS. 15 to 18, and the charge/discharge capacity of the formation cycle, the charge/discharge capacity of the 0th cycle, the discharge capacity of the 1st cycle, and De-rating were confirmed and shown in Table 3 below. In addition, the resistance increase rates at 10, 30, and 50 cycles were confirmed and shown in Table 4 below. For reference, the De-rating is a value showing the percentage of the discharge capacity of the 1st cycle to the discharge capacity of the 0th cycle.

[Table 3]

| Division | Formation cycle | | 0th cycle (0.1C, 45°C) | | 1st cycle discharge capacity (0.33C, 25°C) (mAh/g) | De-rating (%) |
|---|---|---|---|---|---|---|
| | Charge capacity (mAh/g) | Discharge capacity (mAh/g) | Charge capacity (mAh/g) | Discharge capacity (mAh/g) | | |
| Example 1 | 301 | 275 | 229 | 216. | 203 | 93.9 |
| Example 2 | 304 | 278 | 230 | 219 | 208 | 94.9 |
| Example 3 | 303 | 276 | 229 | 218 | 207 | 95.0 |
| Example 4 | 298 | 270 | 223. | 210 | 200 | 95.2 |
| Example 5 | 305 | 280 | 232 | 218 | 207 | 95.0 |
| Comparative Example 1 | 304 | 276 | 226 | 209 | 191 | 91.3 |
| Comparative Example 2 | 305 | 278 | 231 | 214 | 198. | 92.5 |

[Table 4]

| Division | Resistance increase rate (%) | | |
|---|---|---|---|
| | 10th cycle | 30th cycle | 50th cycle |
| Example 1 | 94.7 | 104.8 | 116.2 |
| Example 2 | 93.4 | 102.7 | 110.8 |
| Example 3 | 86.8 | 87.8 | 90.5 |
| Example 4 | 75.3 | 74.1 | 78.4 |
| Example 5 | 78.5 | 74.4 | 75.8 |
| Comparative Example 1 | 95.4 | 106.9 | 117.9 |
| Comparative Example 2 | 93.8 | 103.2 | 112.6 |

Referring to Table 3, Table 4, and FIGS. 15 to 18, it can be confirmed that, in the case of batteries including the positive electrode active materials manufactured in Examples 1 and 4, the discharge capacity after formation is superior, the De-rating is high, and the resistance increase rate is low compared to the battery including the positive electrode active material manufactured in Comparative Example 1. In addition, it can be confirmed that, in the case of batteries including the positive electrode active materials manufactured in Examples 2, 3, and 5, the discharge capacity after formation is superior, the De-rating is high, and the resistance increase rate is low compared to the battery including the positive electrode active material manufactured in Comparative Example 2.

From these, it can be seen that the positive electrode active material according to the present invention has uniform first and second layers, and thus can improve various performances of the battery when applied to the battery.

**Claims**

1. A positive electrode active material comprising:

   a core part including a lithium-rich manganese-based oxide having a layered structure simultaneously including a $Li_2MnO_3$ phase and a $LiMO_2$ phase, wherein M is an element including at least one selected from Ni, Co, and Mn;
   a first layer formed continuously on the core part and including a crystal structure belonging to an R-3m space group; and
   a second layer formed continuously on the first layer and including a rock salt-type crystal structure belonging to an Fm-3m space group.

2. The positive electrode active material according to claim 1, wherein the lithium-rich manganese-based oxide includes at least one doping element selected from Mo, Nb, K, Cl, Na, Ti, Mg, Ru, Ta, and Zr.

3. The positive electrode active material according to claim 1, wherein the lithium-rich manganese-based oxide includes a crystal structure belonging to a C2/m space group and an R-3m space group.

4. The positive electrode active material according to claim 1, wherein the lithium-rich manganese-based oxide has a manganese (Mn) content of 50 mol% or more among the total metals excluding lithium.

5. The positive electrode active material according to claim 1, wherein the lithium-rich manganese-based oxide has a composition represented by Chemical Formula 1 below:

   [Chemical Formula 1]     $Li_aNi_bCo_cMn_aMe_eO_2$

   wherein:

   Me is at least one selected from Mo, Nb, K, Cl, Na, Ti, Mg, Ru, Ta, and Zr, and

   $$1.09 \leq a \leq 1.20,$$

   $0 \leq b \leq 0.50$, $0 \leq c \leq 0.10$, $0.50 \leq d \leq 1.0$, and $0 < e \leq 0.10$.

6. The positive electrode active material according to claim 1, wherein the lithium-rich manganese-based oxide is in the form of a secondary particle.

7. The positive electrode active material according to claim 1, wherein the lithium-rich manganese-based oxide has an average particle diameter ($D_{50}$) of 5 $\mu$m to 15 $\mu$m.

8. The positive electrode active material according to claim 1, wherein the positive electrode active material further includes a coating layer formed on the second layer and including at least one selected from carbon and sulfur.

9. The positive electrode active material according to claim 8, wherein the coating layer further includes boron.

10. The positive electrode active material according to claim 8 or claim 9, wherein the carbon is derived from urea, and the sulfur is derived from thiourea.

11. The positive electrode active material according to claim 1, wherein the first layer has a thickness of 0.5 nm to 20 nm.

12. The positive electrode active material according to claim 1, wherein the second layer has a thickness of 0.5 nm to 20 nm.

13. A method for manufacturing the positive electrode active material according to claim 1, the method comprising the steps of:

(A) dry mixing a composite transition metal hydroxide and a lithium-containing raw material, followed by a first calcination at 400°C to 500°C and a second calcination at 800°C to 1000°C to produce a lithium-rich manganese-based oxide; and

(B) dry mixing at least one selected from urea and thiourea with the lithium-rich manganese-based oxide by a mechanofusion method, followed by heat treatment at 300°C to 550°C.

14. The method for manufacturing the positive electrode active material according to claim 13, wherein in the step (A), when dry mixing the composite transition metal hydroxide and the lithium-containing raw material, a doping raw material including at least one doping element selected from Mo, Nb, K, Cl, Na, Ti, Mg, Ru, Ta, and Zr is further mixed.

15. The method for manufacturing the positive electrode active material according to claim 13, wherein the composite transition metal hydroxide has a composition represented by Chemical Formula 2 below:

[Chemical Formula 2]   $Ni_{b'}Co_{c'}Mn_{d'}Me_{e'}(OH)_2$

wherein:

Me is at least one selected from Mo, Nb, K, Cl, Na, Ti, Mg, Ru, Ta, and Zr, and
$0 \leq b' \leq 0.50$, $0 \leq c' \leq 0.10$, $0.50 \leq d' \leq 1.0$, $0 \leq e' \leq 0.10$, and $b'+c'+d'+e'=1$.

16. The method for manufacturing the positive electrode active material according to claim 13, wherein the first calcination and the second calcination are each independently performed under an atmospheric atmosphere or an oxygen atmosphere.

17. The method for manufacturing the positive electrode active material according to claim 13, wherein in the step (B), the at least one selected from urea and thiourea is mixed in an amount of 0.3 to 3 parts by weight based on 100 parts by weight of the lithium-rich manganese-based oxide.

18. The method for manufacturing the positive electrode active material according to claim 13, wherein the heat treatment is performed under an $N_2$ atmosphere.

19. The method for manufacturing the positive electrode active material according to claim 13, wherein in the step (B), when dry mixing the at least one selected from urea and thiourea with the lithium-rich manganese-based oxide, a boron-containing raw material is further mixed.

20. The method for manufacturing the positive electrode active material according to claim 19, wherein the boron-containing raw material is mixed in an amount of 0.2 to 2 parts by weight based on 100 parts by weight of the lithium-rich manganese-based oxide.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

[FIG. 13]

[FIG. 14]

[FIG. 15]

[FIG. 16]

[FIG. 17]

[FIG. 18]

## INTERNATIONAL SEARCH REPORT

| International application No. |
|---|
| **PCT/KR2024/015392** |

| A. | CLASSIFICATION OF SUBJECT MATTER |
|---|---|

**H01M 4/36**(2006.01)i; **H01M 4/505**(2010.01)i; **H01M 4/525**(2010.01)i; **C01G 53/00**(2006.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/36(2006.01); C01F 17/00(2006.01); H01M 10/052(2010.01); H01M 4/13(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극 활물질(cathode active material), 리튬-과잉 망간계 산화물(lithium-rich manganese oxide), 코어(core), 코팅층(coating layer), 도핑(doping), 공간군(space group), 유레아(urea), 붕소(boron)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2020-0038661 A (SAMSUNG ELECTRONICS CO., LTD. et al.) 14 April 2020 (2020-04-14) See claims 1-3, 23, 24, 28, 33 and 34; and paragraphs [0037]-[0043], [0064]-[0066], [0079], [0101]-[0112], [0162] and [0164]-[0185]. | 1-7,11,12 |
| Y | | 8-10,13-20 |
| Y | KR 10-2023-0082824 A (UIF (UNIVERSITY INDUSTRY FOUNDATION), YONSEI UNIVERSITY et al.) 09 June 2023 (2023-06-09) See claims 1 and 5; and paragraphs [0046], [0082] and [0087]-[0090]. | 8-10,13-20 |
| Y | JP 2015-201388 A (NICHIA CHEMICAL IND. LTD.) 12 November 2015 (2015-11-12) See claims 1 and 2; and paragraphs [0028] and [0038]. | 9,19,20 |
| A | KR 10-2018-0056310 A (SAMSUNG ELECTRONICS CO., LTD. et al.) 28 May 2018 (2018-05-28) See abstract; and claims 1-20. | 1-20 |

| ✓ | Further documents are listed in the continuation of Box C. | ✓ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 January 2025** | **14 January 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/015392**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2022-0079430 A (ECOPRO BM CO., LTD.) 13 June 2022 (2022-06-13)<br>See abstract; and claims 1-11. | 1-20 |

Form PCT/ISA/210 (second sheet) (July 2022)

## INTERNATIONAL SEARCH REPORT
### Information on patent family members

International application No.

**PCT/KR2024/015392**

| Patent document cited in search report | | | Publication date (day/month/year) | Patent family member(s) | | | Publication date (day/month/year) |
|---|---|---|---|---|---|---|---|
| KR | 10-2020-0038661 | A | 14 April 2020 | CN | 111009640 | A | 14 April 2020 |
| | | | | EP | 3632851 | A1 | 08 April 2020 |
| | | | | JP | 2020-061360 | A | 16 April 2020 |
| | | | | JP | 7483296 | B2 | 15 May 2024 |
| | | | | KR | 10-2629462 | B1 | 26 January 2024 |
| | | | | US | 11955631 | B2 | 09 April 2024 |
| | | | | US | 2020-0112024 | A1 | 09 April 2020 |
| | | | | US | 2024-0258517 | A1 | 01 August 2024 |
| KR | 10-2023-0082824 | A | 09 June 2023 | US | 2023-0178730 | A1 | 08 June 2023 |
| JP | 2015-201388 | A | 12 November 2015 | JP | 6524610 | B2 | 05 June 2019 |
| KR | 10-2018-0056310 | A | 28 May 2018 | CN | 108075115 | A | 25 May 2018 |
| | | | | CN | 108075115 | B | 23 September 2022 |
| | | | | EP | 3327834 | A1 | 30 May 2018 |
| | | | | EP | 3327834 | B1 | 29 April 2020 |
| | | | | US | 10868305 | B2 | 15 December 2020 |
| | | | | US | 2018-0145322 | A1 | 24 May 2018 |
| KR | 10-2022-0079430 | A | 13 June 2022 | CN | 116250101 | A | 09 June 2023 |
| | | | | CN | 116325223 | A | 23 June 2023 |
| | | | | CN | 116325224 | A | 23 June 2023 |
| | | | | CN | 116325225 | A | 23 June 2023 |
| | | | | CN | 116325226 | A | 23 June 2023 |
| | | | | CN | 116670853 | A | 29 August 2023 |
| | | | | EP | 4216311 | A1 | 26 July 2023 |
| | | | | EP | 4216312 | A1 | 26 July 2023 |
| | | | | EP | 4231389 | A1 | 23 August 2023 |
| | | | | EP | 4258386 | A1 | 11 October 2023 |
| | | | | EP | 4258387 | A1 | 11 October 2023 |
| | | | | EP | 4258388 | A1 | 11 October 2023 |
| | | | | JP | 2023-544060 | A | 19 October 2023 |
| | | | | JP | 2023-544135 | A | 20 October 2023 |
| | | | | JP | 2023-544136 | A | 20 October 2023 |
| | | | | JP | 2023-544137 | A | 20 October 2023 |
| | | | | JP | 2023-544339 | A | 23 October 2023 |
| | | | | JP | 2023-551720 | A | 12 December 2023 |
| | | | | JP | 7597921 | B2 | 10 December 2024 |
| | | | | KR | 10-2022-0079404 | A | 13 June 2022 |
| | | | | KR | 10-2022-0079408 | A | 13 June 2022 |
| | | | | KR | 10-2022-0079409 | A | 13 June 2022 |
| | | | | KR | 10-2022-0079427 | A | 13 June 2022 |
| | | | | KR | 10-2022-0079429 | A | 13 June 2022 |
| | | | | KR | 10-2024-0118719 | A | 05 August 2024 |
| | | | | KR | 10-2689920 | B1 | 30 July 2024 |
| | | | | KR | 10-2689934 | B1 | 30 July 2024 |
| | | | | US | 2023-0231128 | A1 | 20 July 2023 |
| | | | | US | 2023-0261179 | A1 | 17 August 2023 |
| | | | | US | 2023-0268497 | A1 | 24 August 2023 |
| | | | | US | 2023-0369566 | A1 | 16 November 2023 |
| | | | | US | 2023-0369571 | A1 | 16 November 2023 |
| | | | | US | 2023-0387403 | A1 | 30 November 2023 |
| | | | | WO | 2022-119156 | A1 | 09 June 2022 |

Form PCT/ISA/210 (patent family annex) (July 2022)

**INTERNATIONAL SEARCH REPORT**
Information on patent family members

International application No.

**PCT/KR2024/015392**

| Patent document cited in search report | Publication date (day/month/year) | Patent family member(s) | | Publication date (day/month/year) |
|---|---|---|---|---|
| | | WO | 2022-119157 A1 | 09 June 2022 |
| | | WO | 2022-119158 A1 | 09 June 2022 |
| | | WO | 2022-119336 A1 | 09 June 2022 |
| | | WO | 2022-119338 A1 | 09 June 2022 |
| | | WO | 2022-119344 A1 | 09 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230135434